# EUROPÄISCHE PATENTANMELDUNG

(11) **EP 0 921 711 A1**
(43) Veröffentlichungstag der Anmeldung: **09.06.1999**
(21) Anmeldenummer: 97120298.1
(22) Anmeldetag: 19.11.1997
(51) Int. Cl.: H05B 6/12

(54) **Vollflächen-Induktionskochherd**

(71) Anmelder: Therma Grossküchen Produktion AG, 6210 Sursee (CH)
(72) Erfinder: Gähler, Max, 6210 Sursee (CH)
(74) Vertreter: Herrmann-Trentepohl, Werner, Dipl.-Ing.

(57) **Zusammenfassung**

Ein Vollflächen-Induktionskochherd ist mit einer Kochfläche 1, die mindestens ein Kochfeld beinhaltet, eine Induktionsheizung 3 in Form von Induktionsspulen, einem Generator 4 und einer Steuerungseinheit 5 ausgestattet. Dabei sind in jedem Kochfeld 2 zwei mindestens zwei Induktionsspulen 3 zugeordnet, wobei die Induktionsspulen 3 eine rechteckige Grundform aufweisen. Die gesamte Oberfläche des Kochfeldes 2 weist eine örtlich konstante Heizleistung auf.

## Beschreibung

Die Erfindung betrifft ein Vollflächen-Induktionskochherd mit einer Kochfläche, die sich aus mindestens einem Kochfeld zusammensetzt, einer Heizeinrichtung, welche Induktionsspulen beinhaltet, mindestens einem Generator und einer Steuerungseinheit.

Induktionsherde für Kücheneinrichtungen sind mittlerweile weit verbreitet, wobei es sich zumeist um Kochherde handelt, die unter anderem mit einer Induktionsheizeinrichtung und einer Kochfläche aus verschiedensten Materialien ausgestattet sind. Das Grundprinzip der Erwärmung bzw. des Erhitzens von Lebensmitteln, welches solchen Induktionsherden zugrunde liegt, ist wie folgt:

Durch eine Wechselspannung, die an eine Induktionsspule angelegt wird, welche unterhalb der Kochfläche angeordnet ist, wird ein magnetisches Feld innerhalb der Spule und in Fortsetzung der Spulenachse aufgebaut. Dieses veränderliche Magnetfeld tritt anschließend durch ein leitendes Material, wie z. B. dem Topfboden eines Kochgefäßes, welches auf der Kochfläche steht, und induziert in diesem leitenden Material eine Spannung, wodurch Wirbelströme erzeugt werden, die auf wirbelartigen Bahnen verlaufen und aufgrund der ohm'schen Verluste Wärme erzeugen. Die auf diese Art erzeugte Wärme wird an die Lebensmittel, die sich in dem Kochgefäß befinden, weitergegeben, wodurch sich diese erwärmen.

Somit ist durch diese Heizeinrichtung ein sofortiges Übergehen der Heizleistung auf den Boden des Kochgefäßes gewährleistet, da es nicht nötig ist, eine Kochplatte anzuheizen. Dadurch, daß eine Kochplatte mit begrenzten Wärmeaufnahmevermögen nicht notwendig ist, ist auch eine relativ hohe Kochleistung möglich, wodurch kurze Kochzeiten erreicht werden. Durch die gezielte Heizleistungsausrichtung und die präzise Leistungsregulierung der Heizleistung dank stufenlosen Bedienungsschaltern wird ein reaktionsschnelles Kochen, auch bei Verwendung von kleinen Kochgefäßen, ermöglicht. Zudem weisen Induktionsherde geringe Wärmeabstrahlung, geringe Verbrennungsgefahr und optimale Arbeitsbedingungen sowie kein Anbrennen auf der Kochfläche aufgrund der relativ geringen Erwärmung der eigentlichen Kochfläche, außerdem weniger Reinigungsaufwand und mehr Hygiene aufgrund der Beschaffenheit der Kochfläche auf. Durch die gezielte Heizleistungssteuerung, sowohl örtlich als auch in ihrer Größenordnung, ist es möglich, eine Energieeinsparung bis zu 50% dank des hohen Wirkungsgrades gegenüber konventionellen Herden zu erreichen.

Solche Induktionsherde weisen jedoch den Nachteil auf, daß durch die runde Grundform der Induktionsspulen die Anordnung von einer Vielzahl von Kochgefäßen nahezu unmöglich ist, da zum einen ein Vielfaches an Kochfläche von Nöten wäre, zum anderen eine engere Anordnung der runden Induktionsspulen eine örtlich uneinheitliche Heizleistung an der Oberfläche der Kochfläche zur Folge hätte. Somit ist es nicht möglich, mehrere Kochgefäße pro Kochfeld gleichzeitig zu benutzen. Dieser Nachteil ist insbesondere für Großküchen von Rele-vanz, da bei konventionellen Induktionskochherden ein erhebliches Mehrmaß an Platzbedarf im Falle des Gebrauchs von einer Vielzahl von Kochgefäßen vonnöten ist, welcher in Gastronomiebetrieben zumeist nicht vorhanden ist.

Somit ist es Aufgabe der Erfindung, einen Vollflächen-Induktionskochherd zur Verfügung zu stellen, der platzsparend in seiner Gesamtkochfläche mit Bezug auf die Anzahl der verwendeten Kochgefäße ist.

Diese Aufgabe wird durch einen Vollflächen-Induktionskochherd gelöst, der mit einer Kochfläche, die mindestens ein Kochfeld beinhaltet, eine Induktionsheizung in Form von Induktionsspulen, mindestens einem Generator und einer Steuerungseinheit ausgestattet ist, und dadurch gekennzeichnet ist, daß jedem Kochfeld mindestens zwei Induktionsspulen zugeordnet sind, diese Induktionsspulen eine rechteckigen Grundform aufweisen und die Gesamtoberfläche der Kochfelder eine örtlich einheitliche Heizleistung aufweist.

Ein solcher Vollflächen-Induktionskochherd hat im Gegensatz zu herkömmlichen Induktionsherden pro Kochfeld zwei rechteckige Induktionsspulen, deren Leistungsregelung über einen gemeinsamen Schalter geregelt wird. Dadurch ist es möglich, die Wärme- bzw. Heizleistung über die gesamte Fläche eines Kochfeldes gleichmäßig zu verteilen. Durch Anordnung der einzelnen Kochfelder und der damit verbundenen Induktionsspulen in unmittelbarer Nachbarschaft zueinander, erreicht man eine aktive Kochfläche, die die Größenordnung der gesamten Kochfläche umfaßt, womit keine örtliche Begrenzung der aktiven Kochfläche auf die Stellen an der Oberfläche der Kochfläche, unterhalb derer eine Induktionsspule im herkömmlichen Sinne angeordnet ist, exestiert.

Durch die unmittelbare Nachbarschaft der rechteckig geformten Induktionsspulen wird eine gegenseitige Beeinflussung der Magnetfelder dieser benachbarten Spulen bewirkt, welches zu einer Magnetfeldkopplung führt. Dadurch können gegenseitige Abschwächungen oder Verstärkungen der Magnetfelder benachbarter Induktionsspulen und demzufolge entsprechende Leistungsminderung oder Erhöhungen auftreten. Zudem können durch die benachbarten Spulenmagnetfelder Ströme bzw. Spannungen in der benachbarten Induktionsspule induziert, also erzeugt werden, insbesondere, wenn eine benachbarte Spule nicht in Betrieb ist, wodurch eine Selbstinduktionsspannung auftritt, die unter Umständen bis zur Zerstörung des Induktionsgenerators, der beide Induktionsspulen versorgt, führen kann.

Um diesen nachteilhaften Effekt der Anordnung der Induktionsspulen gemäß der Erfindung zu vermeiden, wird mittels einer Mikroprozessorsteuerung, die in der Steuerungseinheit vorhanden ist, eine automatische Sollwertkorrektur bei Einschalten benachbarter Induktionsspulen eingeführt und somit das Einschalten benachbarter Spulen überwacht und die Leistungsveränderung dieser Induktionsspulen automatisch korrigiert. Zur Vermeidung von Induktionsspannungen gemäß dem Induktionsgesetz in benachbarten Spulen wird beim Einschalten von nur einer Induktionsspule der ganze Generator in Betrieb genommen, wobei beispielsweise die vorderen vier Induktionsspulen an einen ersten Generator und die hinteren vier Induktionsspulen an einen zweiten Generator angeschlossen werden können.

Zudem treten durch das gegenseitige Überlagern von Arbeitsfrequenzen der benachbarten Induktionsspulen Interferenzen auf, wodurch eine starke Geräuschentwicklung in Form von Pfeifen in den Kochgefäßen, die auf der Kochfläche angeordnet sind, entstehen kann. In diesem Fall wirken die Kochgefäße als Lautsprecher, wodurch die Geräusche in verstärkter Form auftreten. Deshalb wird mittels der Steuerungseinheit eine Leistungssteuerung mit Hilfe von Pulsbreitenmodulation zur Synchronisation der Frequenzen von zwei benachbarten Induktionsspulen eingeführt.

Zudem beinhalten die Induktionsspulen gemäß der Erfindung eine erhöhte Anzahl an Litzen, um der Selbsterwärmung der Spulen, die durch den Skin-Effekt auftreten, zu verringern. Dadurch können größere Spulenströme durch die Induktionsspulen fließen, wodurch eine erhöhte Heizleistung und somit eine größere Leistungsdichte der Spule bewirkt werden kann.

Weitere Merkmale, Vorteile und Einzelheiten der Erfindung ergeben sich aus der nachfolgenden Beschreibung von bevorzugten Ausführungsbeispielen anhand der Zeichnung. Darin zeigen :
- Fig. 1: Eine schematische Ansicht eines Vollflächen-Induktionskochherdes gemäß der Erfindung,
- Fig. 2: die erfindungsgemäße Anordnung der Induktionsspulen mit darüberliegender Kochfläche,
- Fig. 3: eine Querschnittsansicht eines Anteils der Schnittstelle von Herdabdeckung und Kochfläche;
- Fig. 4: eine Vorderansicht einer möglichen Ausgestaltung des gesamten erfindungsgemäßen Induktionskochherdes; und
- Fig. 5: die Struktur der Oberfläche der Kochfläche des Induktionskochherdes gemäß der Erfindung.

Bei den nachfolgend beschriebenen Ausführungsbeispielen sind die sich entsprechenden Teile mit gleichen Bezugsziffern bezeichnet.

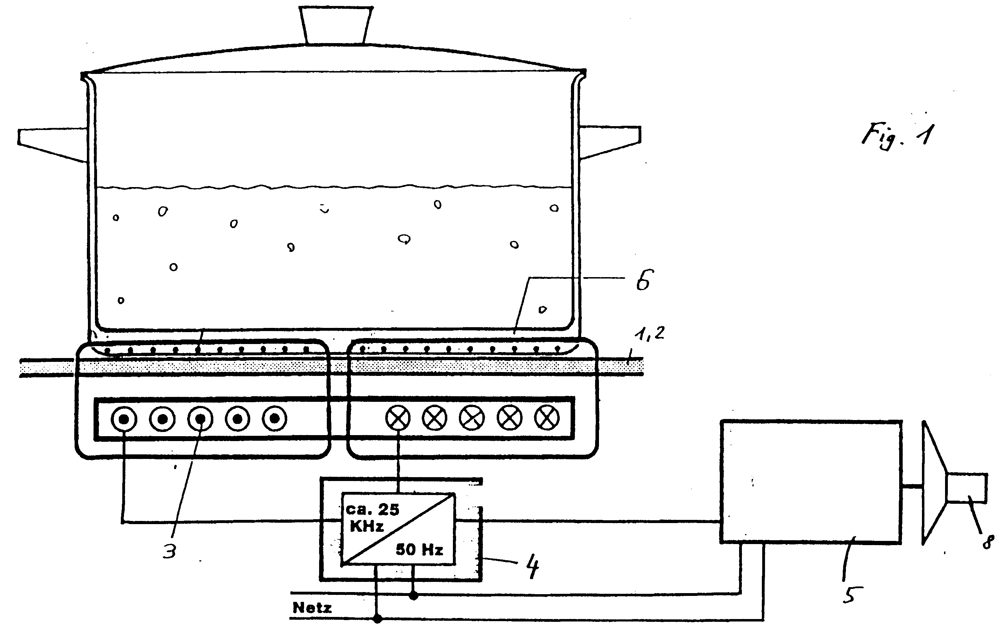

Wie aus Fig. 1 zu entnehmen ist, weist der Vollflächen-Induktionskochherd eine Kochfläche 1, die mindestens aus einem Kochfeld 2 besteht, Induktionsspulen 3, mindestens einen Generator 4 und eine Steuerungseinheit 5 auf. Dabei hat der Vollflächen-Induktionskochherd im Gegensatz zu konventionellen Induktionsherden pro Kochfeld 2 zwei rechteckige Induktionsspulen, die in Ihrer Grundform die Abmaße 2 x 190 x 330 mm und jeweils eine Leistung von 3,5 kW aufweisen, wohingegen herkömmlich verwendete runde Induktionsspulen jeweils eine Heizleistung von 5 kW beinhalten. Durch die rechteckige Grundform und die enge Aneinanderreihung der Induktionsspulen erfolgt die Wärme -bzw. Leistungsverteilung über das gesamte Kochfeld gleichmäßig, wobei eine spezifische Leistungsdichte von ca. 6 W/cm² vorhanden ist.

Wie aus Fig. 1 ersichtlich ist, sind die beiden Induktionsspulen, die einem Kochfeld zugeordnet sind, unmittelbar unterhalb der Kochfläche, welche in diesem Fall aus einem Glaskeramik-Material besteht, angeordnet und erzeugen ein magnetisches Wechselfeld, welches über induzierte Spannungen und Wirbelströme in dem Kochtopfboden 6, der aus ferromagnetischem Material besteht, eine Erwärmung bzw. Erhitzung des in dem Kochtopf enthaltenen Mediums bewirken. An beiden Induktionsspulen ist ein Generator angeschlossen, der beispielsweise die 50 Hz-Frequenz, welche über das Stromnetz bezogen wird, in eine Frequenz von 25 kHz umwandelt, um ein schnellwechselndes Magnetfeld mittels der Induktionsspulen zu erhalten. Dieser Generator 4 ist zudem mit der Steuerungseinheit 5 verbunden, um eine Steuerung der Heizleistung mittels Generator und Steuerungseinheit zu ermöglichen. Die Steuerungseinheit 5 ist wiederum an einen Bedienungsschalter 8 angeschlossen, welcher in der Regel manuell betätigt wird. Dieser Bedienungsschalter 8 könnte z. B. in Form von Drehschaltern, Druckknöpfen oder Kapazitätssensoren mit digitaler Anzeige ausgeformt sein.

In dieser erfindungsgemäßen Ausführungsform wird ein Induktionsgenerator mit vier Induktionsspulen jeweils verbunden, wobei die Gesamtzahl der Induktionsspulen in diesem Fall 8 beträgt.

Die Induktionsspulen sind zudem in metallische Stützrahmen eingefaßt, welche als Spulenträger dienen. In einem geschlossenen Spulenträger wird ein zirkulierender Wirbelstrom durch die Spulen erzeugt, der den Stützrahmen erhitzt. Deshalb tritt ebenso eine Erwärmung des Spulenträgers auf, welche erfindungsgemäß verringert werden kann, indem die Spulenträger nicht ringförmig geschlossen, sondern einfach oder mehrfach aufgeteilt werden. Dadurch unterbricht diese Konstruktion der Spulenträger den zirkulierenden magnetischen Fluß in dem Spulenträgerrahmen.

In herkömmlichen Ausführungsformen war es möglich, daß die auf der Kochfläche angeorderten Kochgefäße durch die auf sie wirkenden Magnetfelder ein statisches Aufladen erfahren haben, wodurch gewisse Auswirkungen auf das Betriebs personal, welches den Kochherd bedient, in Form von Magnetfeldern bzw. magnetischen Wellen nicht ausgeschlossen war. Um diese mögliche Zusatzbelastung des Betriebspersonals zu vermeiden, ist eine Folie, die z. B. einseitig mit Metall, wie Aluminium, beschichtet ist, zwischen den Induktionsspulen 3 und einer Glaskeramikplatte 1, die als Kochfläche dient, angeordnet.

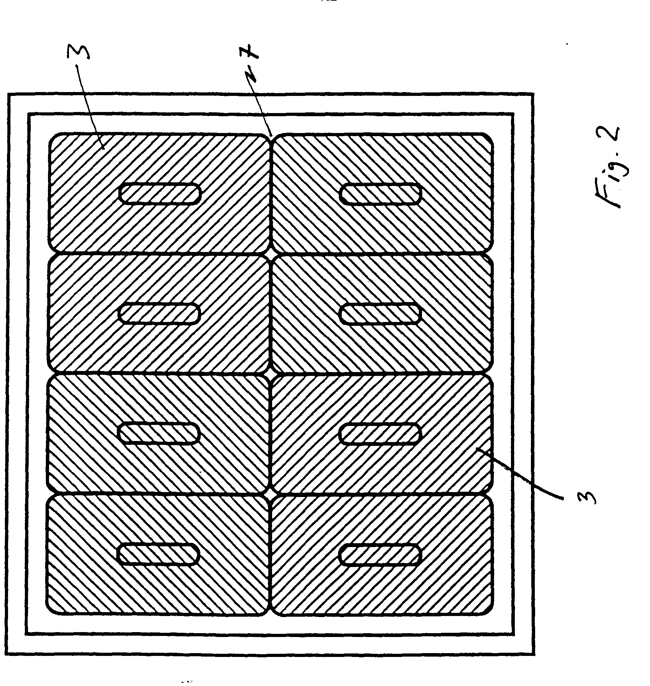

In Fig. 2 wird die Anordnung der Induktionsspulen mit der darüberliegenden Kochfläche gemäß der Erfindung gezeigt. Die Abstände 7 zwischen den Induktionsspulen 3 werden sehr gering gehalten, wie z. B. in der Größenordnung von 5 mm, um eine gleichmäßige Heizleistung der gesamten Kochfläche zu gewährleisten. Jedoch bewirkt die Nähe der Spulen zueinander eine Beeinflussung der Magnetfelder der benachbarten Induktionsspulen in Form von Magnetfeldkopplungen, wodurch nachteilhaft nicht nur eine gegenseitige Beeinflussung, welche sich als Abminderung oder Verstärkung des Magnetfeldes auswirken kann der Magnetfelder der benachbarten Induktionsspulen mit entsprechender Heizleistungsveränderung, sowie eine Erzeugung von einem Induktionsstrom bzw. einer Induktionsspannung in einer ausgeschalteten Induktionsspule, die einer sich im Betrieb befindlichen Induktionsspule benachbart ist, sondern auch das gegenseitige Überlagern von Arbeitsfrequenzen in Form von Interferenzen und somit zur starken Geräuschentwicklung in den Kochgefäßen, die entsprechende Lautsprecherwirkung haben, auftreten. In dem Ausführungsbeispiel gemäß der Erfindung wird mittels einer Mikroprozessorsteuerung, welche in der Steuerungseinheit 5 integriert ist, eine automatische Sollwertkorrektur der Heizleistung der Induktionsspule durchgeführt, wodurch der Einschaltvorgang der benachbarten Induktionsspulen überwacht und eine Leistungsveränderung der benachbarten Induktionsspulen automatisch korrigiert wird.

Zudem sind in dem erfindungsgemäßen Ausführungsbeispiel die vorderen vier Spulen an einem ersten und die hinteren vier Induktionsspulen an einem zweiten Generator angeschlossen. Im Falle des Einschaltens von ledigich einer Induktionsspule wird der gesamte Generator in Betrieb genommen. Dadurch wird die Möglichkeit des Erzeugens eines Stromes bzw. einer Spannung aufgrund des Induktionsgesetzes einer ausgeschalteten Spule, wenn die benachbarte Induktionsspule in Betrieb ist, ausgeschaltet.

Die Steuerungseinheit 5 gemäß der Erfindung ist außerdem dazu imstande, die Heizleistungssteuerung mittels Pulsbreitenmodulation durchzuführen, wodurch eine Frequenzsynchronisation von benachbarten Induktionsspulen in ihrem Betrieb ermöglicht wird. Dadurch werden mögliche Interferenzen beim gegenseitigen Überlagern von Arbeitsfrequenzen benachbarter Induktionsspulen und demzufolge eine starke Geräuschentwicklung in Form von Pfeifen innerhalb der Kochgefäße, die durchaus als Lautsprecher wirken können, ausgeschaltet.

Aus Fig. 2 ist zudem ersichtlich, daß die einzelnen Induktionsspulen 3 mit ihren dazugehörigen Induktionsmagnetfeld ungefähr 80 % oder mehr der gesamten Fläche der vorhandenen Kochfläche abdecken. Jedoch ist beispielsweise auch eine nur 75 %-ige Abdeckung der gesamten Kochfläche mit Induktionsspulen denkbar. Somit ist ein stellenweises und örtlich begrenztes Erwärmen bzw. Erhitzen von Kochgefäßen auf der Oberfläche des Kochfeldes ausgeschaltet und ein dichteres Anordnen von Kochtöpfen und damit eine Erwärmung einer höheren Anzahl von Kochtöpfen möglich.

Die Induktionsspulen selber beinhalten eine erhöhte Litzenanzahl gegenüber den benutzten Induktionsspulen von herkömmlichen Kochherden, wie z. B. 60 gegenüber 36 Stück. Somit kann die Erwärmung gemäß des Skin-Effektes, der eine Erwärmung der Oberfläche der Induktionsspulen bewirkt, verringert werden, womit größere Spulenströme durch die Induktionsspulen fließen können, welche wiederum eine erhöhte Heizleistungsdichte der Spule ermöglichen und damit eine schnellere Erwärmung von Speisen, die in den Kochgefäßen enthalten sind.

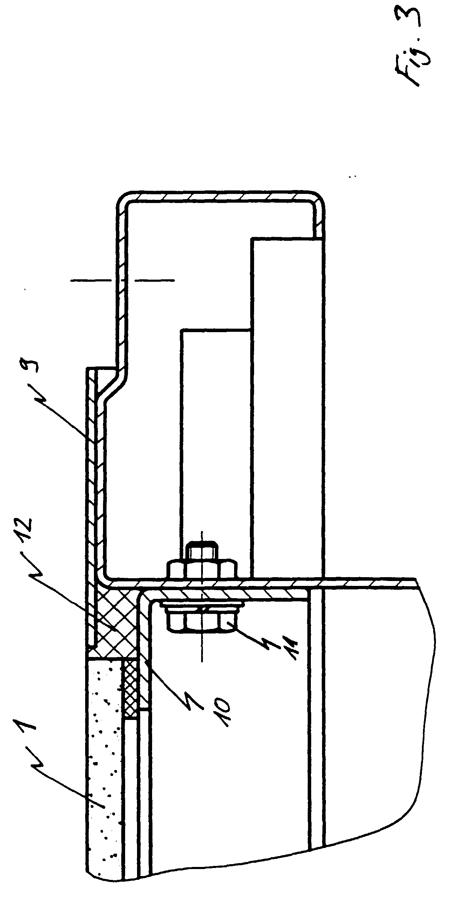

Fig. 3 zeigt eine Querschnittsansicht eines Abschnitts der Schnittstelle von der Herdabdeckung 9, die zum Beispiel aus Chrom/Nickel/Stahl gefertigt ist und der Kochfläche bzw. den Induktionsspulen 3. In dieser Querschnittsansicht wird erfindungsgemäß ein zusätzliches Profil 10 gezeigt, welches als Abschirimung gegenüber der Wärme und den magnetischen Feldern, die von den Induktionsspulen 3 ausgehen, für die Herdabdeckung 9 dient. Aufgrund der Nähe zu den Induktionsspulen erwärmt sich die Herdabdeckung besonders an den Stellen, an denen die Längsseiten der Induktionsspulen 3 entlang der Herdabdeckung 9 verlaufen, örtlich sehr stark. Dies bewirkt zum einen eine Wärmeabstrahlung an benachbarte Geräte, die in unmittelbarer Nachbarschaft zu dem erfindungsgemäßen Vollflächen-Induktionskochherd angeordnet sind, zum anderen erfordert es zusätzliche Vorsichtsmaßnahmen von dem Betriebspersonal in der Handhabung des Induktionskochherds. Durch Verwenden eines Profils 10 aus z. B. Aluminium, welches mit der Herdabdeckung 9 mittels Schrauben 11 verschraubt ist, wird die Herdabdeckung 9 vor der von den Induktionsspulen 3 ausgehende Wärme sowie den magnetischen Feldern abgeschirmt. Zwar erwärmt sich das Aluminiumprofil 10 ebenfalls in einem Magnetfeld, jedoch nicht in der gleichen Intensität wie der Chrom-Nickelstahl, und leitet zudem die örtlich erzeugte Wärme wesentlich schneller ab und verteilt diese bessser auf die gesamte Konstruktion. Zudem ist zwischen der Kochfläche und der Herdabdeckung 9 eine Verkittung aus Silicon 12 angebracht, die fugenfüllenden und wärmeisolierenden Zwecken dient.

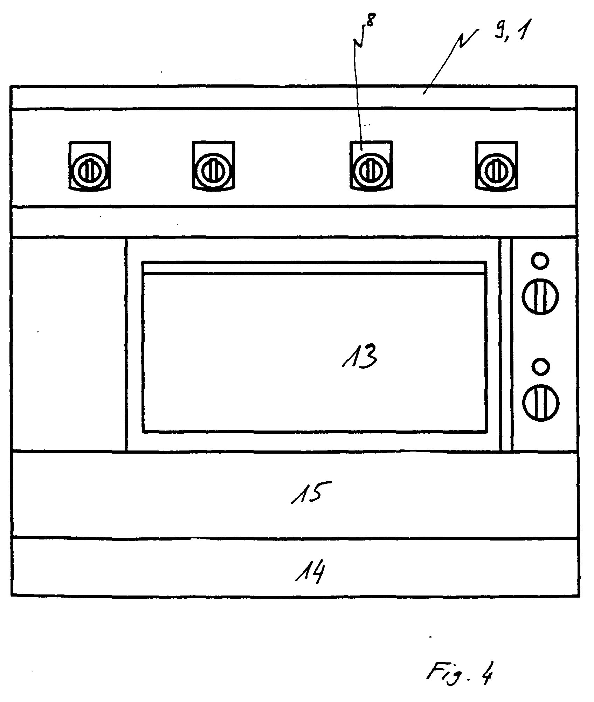

In Fig. 4 wird die Frontansicht einer Ausführungsform eines gesamten Vollflächen-Induktionskochherdes gezeigt. In dieser Ausführungsform ist von oben nach unten angeordnet eine Herdabdeckung 9 zusammen mit einer Kochfläche 1, darunter die Bedienungselemente 8, anschließend der Herdunterbau 13, der als Abstellraum, Wärmeschrank oder Backofen ausgebildet sein kann, worunter die Steuerungseinheit zusammen mit den Generatoren angeordnet ist, und zuletzt ein Sockel 14, auf dem der Vollflächen-Induktionskochherd angeordnet ist.

In herkömmlichen Induktionsherden befinden sich die Induktionsgeneratoren und Steuerungselemente unmittelbar unterhalb der Induktionsspulen, wohingegen in der erfindungsgemäßen Ausführungsform die Induktionsspulen von der Steuerungseinheit 5 und dem Generator 4 örtlich getrennt sind. Diese können beispielsweise unterhalb des Unterbaus 13 des Kochherdes angeordnet sein. Dadurch wird bewirkt, daß die elektronischen Bauteile, welche in der Steuerungseinheit und in den Generatoren enthalten sind, sich während des Betriebes nicht erwärmen und sich automatisch an der kühlsten Stelle des Kochherdes befinden. Eine entsprechend höhere Lebensdauer der Elektronikbauteile ist dadurch bewirkt. Zudem ist die Kühlluft, die von Kühlventilatoren angesaugt wird und zur Abfuhr der Verlustwärme der Generatoren benützt wird, in handelsüblichen Küchen in der Bodennähe am kältesten, d. h., dadurch ist die Kühlung am wirkungsvollsten. Desweiteren ist es möglich, den Generator im Falle eines Defektes auszubauen, ohne den gesamten Kochherd zerlegen zu müssen oder die Herdabdeckung bzw. die Kochfläche zu demontieren. Kostenvorteile während dieses Servicedienstes sind dadurch gegeben.

Durch die örtliche Trennung der Steuerungseinheit bzw. der Generatoren von den Induktionsspulen ist es möglich, daß der Unterbau des Herdes 13 mit elektrisch beheizten Einrichtungen, wie z. B. einem Wärmeschrank oder einem Brat- und/oder Backofen ausgestattet wird. Jedoch sind ebenso Ausführungsbeispiele denkbar, in denen der Induktionskochherd entweder ohne Unterbau oder mit unbeheiztem Abstellraum im Bereich des Herdunterbaus 13 ausgestattet ist.

Die Kühlventilatoren, welche nicht gezeigt sind, sind in Form von Querstromgebläsen ausgestaltet.

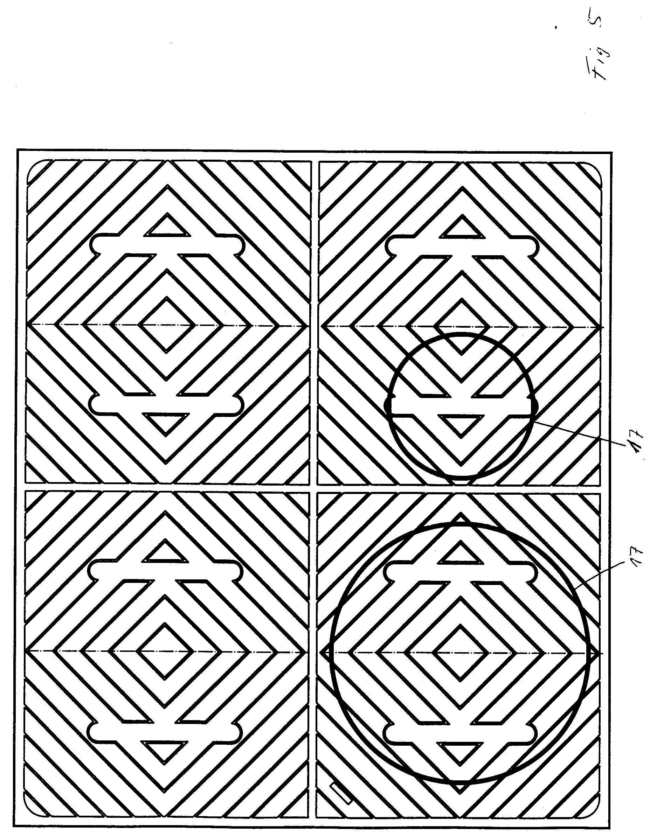

In Fig. 5 ist die Struktur einer Kochfläche, in diesem Fall einer Glaskeramikplatte, des erfindungsgemäßen Vollflächen-Induktionskochherdes dargestellt. Aus Sicherheitsgründen ist jede Induktionsspule mit einer separaten Topferkennungseinrichtung ausgestattet, die ab dem Zeitpunkt reagiert, ab dem ca. 1 / 3 der Oberfläche einer Spule mit einem Kochgefäß überdeckt wird. Eine solche Topferkennungseinrichtung ermöglicht es, zu Regelungszwecken mehr als eine Induktionsspule gleichzeitig einzuschalten.

In Abhängigkeit von den Topferkennungsdetektoren sollte ein einzelnes kleines Kochgeschirr so auf das Hochfeld gestellt werden, daß nur eine Spule im Feld abgedeckt ist. Deshalb ist zur Vereinfachung der Handhabung des Kochgeschirrs das Zentrum der Induktionsspulen 3 gemäß Figur 2 auf der Kochfläche dementsprechend gekennzeichnet. Somit ist leichter zu erkennen, an welchen Stellen kleine und große Kochgefäße 17 aufzusetzen sind. Die Struktur der Glaskeramikplatte ist so ausgebildet, daß erkennbar ist, in welchem Bereich sich zusammengehörige Induktionsspulen bezüglich einem Kochfeld, befinden.

## Patentansprüche

1. Vollflächen-Induktionskochherd mit einer Kochfläche (1), die mindestens ein Kochfeld (2) beinhaltet, einer Induktionsheizung (3) in Form von Induktionsspulen (3), mindestens einem Generator (4) und einer Steuereinheit (5), **dadurch gekennzeichnet, daß** jedem Kochfeld (2) mindestens zwei Induktionsspulen (3) zugeordnet sind, die Induktionsspulen (3) eine rechteckige Grundform aufweisen, und daß die Gesamtoberfläche des Kochfeldes (2) eine örtlich konstante Heizleistung aufweist.

2. Vollflächen-Induktionskochherd nach Anspruch 1, **dadurch gekennzeichnet, daß** die in ihrer Grundform rechteckigen Induktionsspulen (3) mit geringem Zwischenabstand (7) in einer Ebene angeordnet sind.

3. Vollflächen-Induktionskochherd nach Anspruch 1, **dadurch gekennzeichnet, daß** im wesentlichen mindestens 80 % der gesamten Kochfläche (1) eine Anordnung aus Induktionsspulen (3) überdeckt.

4. Vollflächen-Induktionskochherd nach Anspruch 1, **dadurch gekennzeichnet, daß** mindestens zwei Induktionsspulen (3) einem gemeinsamen Bedienungsschalter (8) zugeordnet sind.

5. Vollflächen-Induktionskochherd nach Anspruch 1, **dadurch gekennzeichnet, daß** die Induktionsspulen (3) eine Litzenanzahl von mindestens 60 aufweisen.

6. Vollflächen-Induktionskochherd nach Anspruch 1, **dadurch gekennzeichnet, daß** einem Generator (4) mindestens vier Induktionsspulen (3) zugeordnet sind.

7. Vollflächen-Induktionskochherd nach Anspruch 1, **dadurch gekennzeichnet, daß** das Kochfeld (2) mit einer Herdabdeckung (9) umfaßt ist, die mit einer Vorrichtung (10, 11) zur Abschirmung der magnetischen Felder und Wärmeabstrahlung von den Induktionsspulen (3) verbunden ist.

8. Vollflächen-Induktionskochherd nach Anspruch 1, **dadurch gekennzeichnet, daß** die Induktionsspulen (3) von Spulenträgern getragen werden, welche einen Rahmen aufweisen, der nicht geschlossen ist.

9. Vollflächen-Induktionskochherd nach Anspruch 1, **dadurch gekennzeichnet, daß** zwischen der Anordnung der Induktionsspulen (3) und der Kochfläche (1) eine mit Metall beschichtete Folie angeordnet ist.

10. Vollflächen-Induktionskochherd nach Anspruch 1, **dadurch gekennzeichnet, daß** die Steuerungseinheit (5) sich im unteren Bereich des Vollflächen-Induktionskochherdes befindet.

11. Vollflächen-Induktionskochherd nach Anspruch 10, **dadurch gekennzeichnet, daß** die Steuerungseinheit (5) eine Mikroprozessorsteuerung zur Überwachung des Einschaltvorganges benachbarter Induktionsspulen (3) und zur automatischen Korrektur von Leistungsschwankungen der Induktionsspulen (3) beinhaltet.

12. Vollflächen-Induktionskochherd nach Anspruch 10, **dadurch gekennzeichnet, daß** die Steuerungseinheit (5) eine Steuerungseinrichtung zum Steuern der Leistung der Induktionsspulen (3) mittels Pulsbreitenmodulation beinhaltet.

13. Vollflächen-Induktionskochherd nach Anspruch 1, **dadurch gekennzeichnet, daß** unterhalb des Induktionskochherdes Vorrichtungen (13) mit elektrisch beheizten Elementen zum Wärmen, Braten oder Backen von Lebensmitteln angeordnet sind.

14. Vollflächen-Induktionskochherd nach Anspruch 1, **dadurch gekennzeichnet, daß** der Induktionskochherd mit Ventilatoren zur Kühlung der Induktionsspulen (3) ausgestattet ist.

15. Vollflächen-Induktionskochherd nach Anspruch 14, **dadurch gekennzeichnet, daß** die Ventilatoren als Querstromgebläse ausgeformt sind.

16. Vollflächen-Induktionskochherd nach Anspruch 1, **dadurch gekennzeichnet, daß** der Induktionskochherd mit einer Topferkennungseinrichtung zum Erkennen von Töpfen und zum Einschalten von mindestens einer Spule ausgestattet ist.

17. Vollflächen-Induktionskochherd nach Anspruch 1, **dadurch gekennzeichnet, daß** die Kochfläche (2) eine Glaskeramikplatte ist, die entsprechende Markierungen für die jeweiligen Kochfelder (2), für die Anordnung kleiner und großer Kochgefäße (17) und für das Erkennen der Spulen aufweist.
